Europäisches Patentamt

European Patent Office

Office européen des brevets

(19)

(11) Veröffentlichungsnummer : **0 169 830**
**B1**

(12) # EUROPÄISCHE PATENTSCHRIFT

(45) Veröffentlichungstag der Patentschrift :
25.05.88

(51) Int. Cl.⁴ : **B 65 G 65/20**

(21) Anmeldenummer : 85890147.3

(22) Anmeldetag : 02.07.85

(54) Vorrichtung zum Abtragen, insbesondere von Schüttguthalden.

(30) Priorität : 25.07.84 AT 2399/84

(43) Veröffentlichungstag der Anmeldung :
29.01.86 Patentblatt 86/05

(45) Bekanntmachung des Hinweises auf die Patenterteilung : 25.05.88 Patentblatt 88/21

(84) Benannte Vertragsstaaten :
BE DE FR GB IT

(56) Entgegenhaltungen :
DE-B- 1 229 912
DE-B- 2 221 873

(73) Patentinhaber : VOEST-ALPINE Aktiengesellschaft
Muldenstrasse 5
A-4020 Linz (AT)

(72) Erfinder : Die Erfinder haben auf ihre Nennung verzichtet

(74) Vertreter : Hübscher, Gerhard, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 Linz (AT)

EP 0 169 830 B1

## Beschreibung

Die Erfindung bezieht sich auf eine Vorrichtung zum Abtragen, insbesondere von Schüttguthalden, bestehend aus einem liegend gelagerten, ums seine Achse drehbaren Schaufelrohr, das über seinen Umfang und seine Länge verteilte, durch Abwurföffnungen im Rohrmantel ins Innere des Schaufelrohres ragende Schaufeln trägt, und aus einem innerhalb des Schaufelrohres vorgesehenen Förderer zum Austragen des von den Schaufeln durch die Abwurföffnungen abgeworfenen Abtragungsgutes.

Schaufelrohre dieser Art (DE-AS 1 229 912) haben gegenüber anderen Abtragungsvorrichtungen den Vorteil, daß die Schüttguthalden über ihre volle Breite gleichzeitig abgetragen werden können, wobei sich eine gute Mischung für das aus dem Schaufelrohr ausgetragene Abtragungsgut ergibt. Um das abgetragene Schüttgut sicher an den innerhalb des Schaufelrohres vorgesehenen Förderer übergeben zu können, ragen die Schaufeln mit ihren Seitenwänden und der die Seitenwände verbindenden Rückwand in das Innere des Schaufelrohres, wobei die Ausschüttkante jeder Schaufel an einer Leitwand unter Druck anliegt, so daß vorzeitig aus den Schaufeln in das Rohrinnere fallendes Schüttgut durch den Schaufelrücken entlang der Leitwand zum Förderer geschoben wird. Da die in das Rohrinnere ragenden Schaufelteile aus einem elastischen Material bestehen, kann eine dichte Anlage an der Leitwand sichergestellt werden, wobei die Ablösung des Abtragungsgutes von den Schaufelwänden durch Wandbewegungen unterstützt wird. Nachteilig bei solchen Abtragungsvorrichtungen ist vor allem, daß die Möglichkeit begrenzt ist, größere Schaufelkräfte über die am Schaufelrohr angeschraubten Schaufeln auf das Schaufelrohr abzutragen, ohne in örtlichen Bereichen unzulässige Belastungen in Kauf zu nehmen.

Damit auch größere Schaufelkräfte aufgenommen werden können, werden innerhalb des Rohrmantels Versteifungen vorgesehen, die jedoch das Ansammeln von Abtragungsgut unterstützen, das durch die Abwurföffnungen nicht auf den Förderer, sondern ins Innere des Schaufelrohres gelangt. Um diesen Nachteil zu vermeiden, ist ein Schaufelrohr bekanntgeworden (AT-PS 291 852), das aus einem Außenmantel und einem mit Abstand vom Außenmantel angeordneten, koaxialen Innenmantel gebildet wird. Da die notwendigen Aussteifungen zwischen den beiden Rohrmänteln angeordnet werden können und die Abwurföffnungen durch die beiden Mäntel verbindende Schächte gebildet werden, kann das Abtragungsgut nur ins Innere des Innenmantels gelangen, wo sich ein abgeschlossener glatter Raum befindet, der keine Möglichkeit für eine Gutansammlung bietet. Nachteilig bei diesen bekannten Schaufelrohren ist allerdings, daß durch das Vorsehen eines Doppelmantels der Konstruktionsaufwand erheblich vergrößert wird und daß durch die Versteifungen zwischen den beiden Mänteln die Schaufeln wegen der erforderlichen Anordnung der Materialschächte zwischen den beiden Mänteln nicht an beliebiger Stelle angebracht werden können. Außerdem sind die an den Schaufeln anschließenden Materialschächte einem vergleichsweise großen Verschleiß ausgesetzt.

Der Erfindung liegt somit die Aufgabe zugrunde, diese Mängel zu vermeiden und eine Abtragungsvorrichtung der eingangs geschilderten Art so zu verbessern, daß einerseits mit einfachen technischen Mitteln ein sicheres Abtragen auch größerer Schaufelkräfte auf den Rohrmantel sichergestellt wird, ohne an der Innenfläche des Schaufelrohres Versteifungen vorsehen zu müssen. Außerdem soll die Voraussetzung für ein leichtes Austauschen der Schaufeln geschaffen werden, die ja Verschleißteile darstellen.

Die Erfindung löst die gestellte Aufgabe dadurch, daß die Schaufeln auf die Abwurföffnungen umschließenden, radial über den Rohrmantel vorragenden Kragenstutzen befestigt sind und zumindest mit ihren Rücken durch die Kragenstutzen ins Innere des Schaufelrohres ragen.

Durch das Vorsehen von Kragenstutzen für die Befestigung der Schaufeln wird zunächst eine ausreichende Versteifung des Rohrmantels insbesondere im Bereich der größten Belastung durch die Schaufelkräfte erreicht, so daß sich zusätzliche Versteifungen erübrigen und ein glattes Innere des Schaufelrohres erhalten wird, ohne ein doppelwandiges Rohr einsetzen zu müssen. Die Kragenstutzen können wegen des Fehlens anderer Versteifungen an beliebiger Stelle des Schaufelrohres angebracht werden. Außerdem ermöglichen die über den Rohrmantel radial vorragenden Kragenstutzen eine vergleichsweise einfache Schaufelbefestigung, was das Austauschen der Schaufeln erleichtert. Da die Schaufeln zumindest mit ihrem Rücken durch die Kragenstutzen und die Abwurföffnungen ins Innere des Schaufelrohres ragen, werden die Kragenstutzen von den Schaufelrücken gegenüber dem Abtragungsgut abgedeckt und vor einem Verschleiß durch das Abtragungsgut bewahrt. Wird im Bereich der Schaufeln ein unzulässig hoher Verschleiß festgestellt, so brauchen lediglich die Schaufeln ausgetauscht zu werden, was aufgrund ihrer Befestigung auf dem Kragenstutzen einfach durchgeführt werden kann.

Besonders einfache Konstruktionsverhältnisse ergeben sich, wenn in weiterer Ausbildung der Erfindung die Schaufeln einen äußeren Ringflansch aufweisen, mit dem sie an einem Endflansch der Kragenstutzen anschraubbar sind. Der Ringflansch bringt nicht nur eine Versteifung der Schaufeln mit sich, sondern erlaubt auch eine vorteilhafte Kraftübertragung auf den Kragenstutzen. Außerdem ergibt sich durch die Schraubverbindung eine einfache Auswechselmöglichkeit für die Schaufeln, so daß das Schaufelrohr an unterschiedliche Abtragungsgüter angepaßt und auch in seiner Drehrichtung umgekehrt werden kann, wenn die Schaufeln um 180° versetzt auf den Kragenstutzen befestigt werden.

Um die Standzeit der Schaufeln zu erhöhen, kann zumindest der ins Innere des Schaufelrohres ragende Rücken der Schaufeln innenseitig einen elastischen, wenigstens eine im Schaufelrücken vorgesehene Durchgangsöffnung abdeckenden Belag, vorzugsweise eine Gummischürze, aufweisen. Diese elastische Schürze schützt den das Abtragungsgut führenden, metallischen Schaufelrücken nicht nur vor Verschleiß, sondern auch vor Korrosion. Die Durchgangsöffnung im Schaufelrücken erlaubt dabei einerseits ein Ausbeulen des elastischen Belages, so daß das Anhaften des Abtragungsgutes an diesem Belag erschwert wird, und bietet anderseits die Möglichkeit, anhaftendes Material einfach vom Belag zu entfernen, indem durch die Durchgangsöffnung hindurch auf den Belag geschlagen wird, so daß das anhaftende Material vom Belag abfällt.

In der Zeichnung ist der Erfindungsgegenstand in einem Ausführungsbeispiel schematisch dargestellt. Es zeigen

Fig. 1 eine erfindungsgemäße Abtragungsvorrichtung in einem vereinfachten Querschnitt,

Fig. 2 ein Schaufelrohr für eine solche Vorrichtung in einer Seitenansicht in einem kleineren Maßstab und

Fig. 3 eine auf einem Kragenstutzen des Schaufelrohres befestigte Schaufel im Schnitt in einem größeren Maßstab.

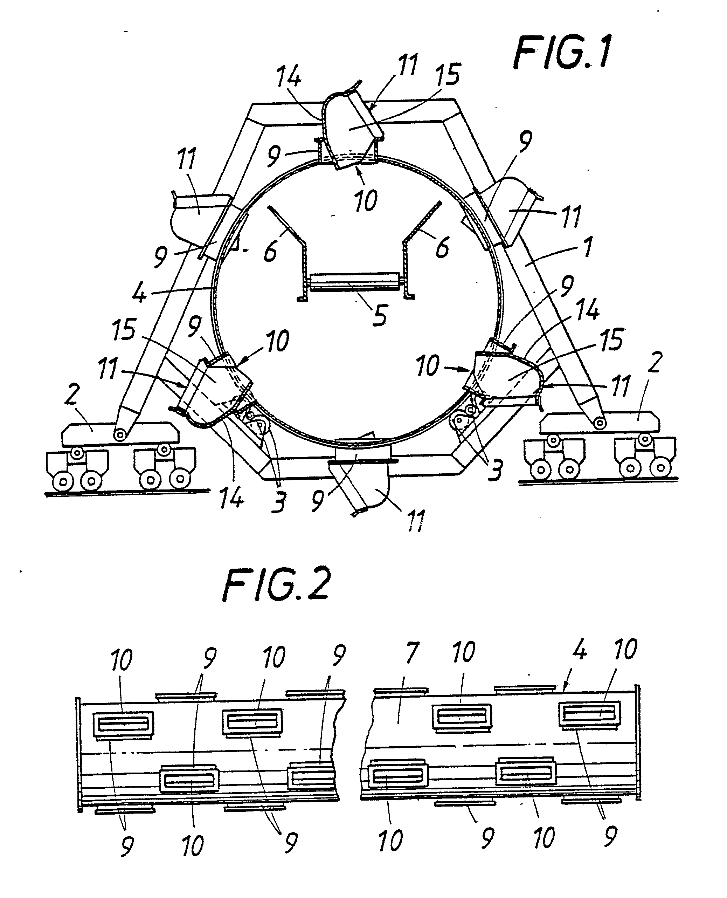

Die dargestellte Abtragungsvorrichtung besteht gemäß Fig. 1 im wesentlichen aus einem Rahmen 1, der mit Hilfe von Laufwagen 2 verfahrbar ist, und aus einem in diesem Rahmen auf antreibbaren Rollen 3 drehbar gelagerten Schaufelrohr 4, das einen Förderer 5 zum Austragen des in das Schaufelrohr 4 abgeworfenen Abtragungsgutes umschließt. Um das Abtragungsgut sicher auf den Förderer 5 überzuleiten, sind seitlich des Förderers 5 Leitbleche 6 vorgesehen, die sich gegen den oberen Schaufelbereich des Schaufelrohres 4 hin trichterartig erweitern.

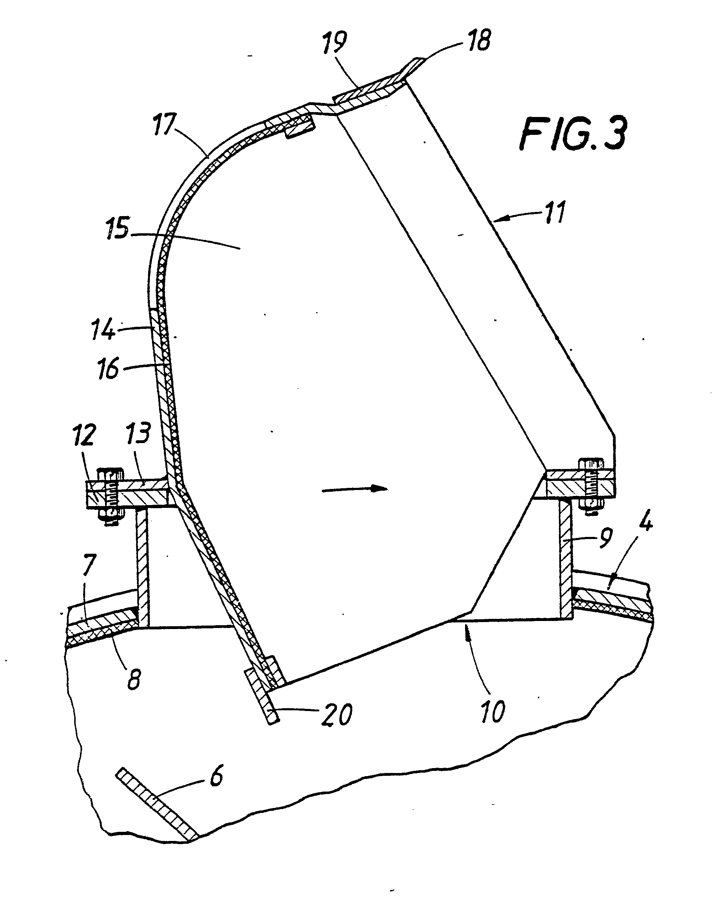

Das Schaufelrohr 4 selbst besteht aus einem Rohrmantel 7, der auf der Innenseite mit einem gummielastischen Belag 8 ausgekleidet ist und über den Rohrmantel 7 radial vorragende Kragenstutzen 9 trägt, die die Abwurföffnungen 10 umschließen und die Schaufeln 11 tragen. Zur Befestigung dieser Schaufeln 11 an dem Endflansch 12 der Kragenstutzen 9 sind sie mit einem Ringflansch 13 umgeben, der auf den Endflansch 12 aufgesetzt und mit diesem durch Schrauben befestigt wird. Die Anordnung ist dabei so getroffen, daß die Schaufeln 11 mit ihrem Rücken 14 und den daran anschließenden Seitenwänden 15 durch die Kragenstutzen 9 in das Innere des Schaufelrohres 4 hineinragen, so daß das von den Schaufeln erfaßte Abtragungsgut bei seinem Hochfördern während der Drehung des Schaufelrohres entlang des Schaufelrückens 14 gegen das in das Rohrinnere ragende Ende gleitet und im oberen Scheitelbereich des Schaufelrohres 4 durch die Abwurföffnungen 10 auf den Förderer 5 abgeworfen wird. Durch die das Abtragungsgut führenden, in das Innere des Schaufelrohres 4 ragenden Teile der Schaufeln 11 werden die Kragenstutzen vor einer Berührung mit dem Abtragungsgut bewahrt, so daß die einen festen Bestandteil des Schaufelrohres 4 bildenden Kragenstutzen 9 vor einem Verschleiß geschützt sind. Einem Verschleiß durch das Abtragungsgut sind lediglich die Schaufeln 11 ausgesetzt, die jedoch einfach ausgetauscht werden können. Außerdem ist es möglich, die Schaufeln 11 vor einem unmittelbaren Verschleiß durch einen elastischen Belag 16 zumindest des Schaufelrückens 14 zu schitzen, wie dies in Fig. 3 dargestellt ist. Ein solcher Belag könnte Anlaß zu einem Anhaften des Abtragungsgutes an den Schaufeln geben. Ein Anlegen des Abtragungsgutes an dem Belag kann durch vom Belag 16 abgedeckte Durchgangsöffnungen 17 im Schaufelrücken 14 weitgehend vermieden werden, weil die vor allem in den gefährdeten Bereichen vorgesehenen Durchgangsöffnungen 17 ein Nachgeben des Belages 16 ermöglichen, was Relativverschiebungen zwischen dem Belag 16 und dem anhaftenden Gut und damit einen Ablösevorgang zur Folge hat. Durch die Durchgangsöffnungen 17 kann darüber hinaus von außen der Belag abgeklopft werden, um für eine entsprechende Reinigung zu sorgen.

Die Schneidkante 18 am vorderen Schaufelrand, die einen nicht schützbaren Verschleißteil darstellt, kann durch ein auswechselbares Verschleißblech 19 gebildet werden, so daß die Standzeit der einzelnen Schaufeln 11 vergleichsweise groß ist.

An dem Schaufelrücken 14 kann im Bereich des ins Innere des Schaufelrohres 4 ragenden Endes ein Abstreifer 20 angeordnet werden, der mit den Leitblechen 6 des Förderers 5 zusammenwirkt und verhindert, daß von den Schaufeln 11 abgeworfenes Abtragungsgut nicht zum Förderer, sondern ins Innere des Schaufelrohres 4 gelangt.

Da der Rohrmantel 7 des Schaufelrohres 4 durch die Kragenstutzen 9 so versteift werden kann, daß keine zusätzliche Versteifung erforderlich wird, bleibt das Innere des Rohrmantels glatt. Die Mantelinnenseite bietet folglich keine Ansatzmöglichkeiten für das allenfalls nicht auf den Förderer 5 gelangende Abtragungsmaterial und kann im Bedarfsfall leicht gereinigt werden. Wegen der Versteifung des Schaufelrohres 4 ausschließlich über die Kragenstutzen 9 bleibt die Anordnung und Verteilung der Kragenstutzen 9 frei wählbar. Es wird daher möglich, die Kragenstutzen und damit die Schaufeln gegeneinander versetzt anzuordnen, wie dies in Fig. 2 dargestellt ist. Diese versetzte Anordnung erlaubt eine vorteilhaftere Belastungsverteilung, was sich in geringeren Wandstärken für den Rohrmantel auswirken kann. Außerdem wird der Verstärkungseffekt durch die Kragenstutzen verbessert und der Mischungseffekt für das abgetragene Gut erhöht.

**Patentansprüche**

1. Vorrichtung zum Abtragen, insbesondere von Schüttguthalden, bestehend aus einem liegend gelagerten, um seine Achse drehbaren Schaufelrohr (4), das über seinen Umfang und seine Länge verteilte, durch Abwurföffnungen (10) im Rohrmantel (7) ins Innere des Schaufelrohres (4) ragende Schaufeln (11) trägt, und aus einem innerhalb des Schaufelrohres (4) vorgesehenen Förderer (5) zum Austragen des von den Schaufeln (11) durch die Abwurföffnungen (10) abgeworfenen Abtragungsgutes, dadurch gekennzeichnet, daß die Schaufeln (11) auf die Abwurföffnungen (10) umschließenden, radial über den Rohrmantel (7) vorragenden Kragenstutzen (9) befestigt sind und zumindest mit ihren Rücken (14) durch die Kragenstutzen (9) ins Innere des Schaufelrohres (4) ragen.

2. Abtragungsvorrichtung nach Anspruch 1, dadurch gekennzeichnet, daß die Schaufeln (11) einen äußeren Ringflansch (13) aufweisen, mit dem sie an einem Endflansch (12) der Kragenstutzen (9) anschraubbar sind.

3. Abtragungsvorrichtung nach Anspruch 1 oder 2, dadurch gekennzeichnet, daß zumindest der ins Innere des Schaufelrohres (4) ragende Rücken (14) der Schaufeln (11) innenseitig einen elastischen, wenigstens eine im Schaufelrücken (14) vorgesehene Durchgangsöffnung (17) abdeckenden Belag (16), vorzugsweise eine Gummischürze, aufweist.

## Claims

1. A removal apparatus, more particularly for removing dumps of bulk material, and comprising : a horizontally mounted vaned tube (4) rotatable around ist axis and having distributed over its periphery and length vanes (11) which extend through discharge orifices (10) in the outer casing (7) of the tube into the inside thereof ; and a conveyor (5) disposed in the tube (4) and operative to deliver the material discharged by the vanes (11) through the orifices (10), characterised in that the vanes (11) are secured to collars (9) which extend around the orifices (10) and project radially beyond the tube casing (7), at least the backs (14) of the vanes (11) extending through the collars (9) into the tube interior.

2. An apparatus according to claim 1, characterised in that the vanes (11) have an outer ring flange (13) by way of which they can be secured to an end flange (12) of the collars (9).

3. An apparatus according to claim 1 or 2, characterised in that at least the vane back (14) extending into the inside of the tube (4) has on the inside a resilient covering (16), preferably a rubber apron, covering at least on aperture (17) in the vane back (14).

## Revendications

1. Dispositif pour reprise de déblai, en particulier de dépôts de matières en vrac, se composant d'un tube (4) de pelle qui, monté à l'horizontale de manière à pouvoir tourner autour de son axe, porte, réparties sur sa périphérie et sur sa longueur, des pelles (11) faisant saillie à travers des ouvertures d'éjection (10) prévues dans l'enveloppe (7) du tube, à l'intérieur du tube (4) de pelle, et d'un convoyeur (5) prévu à l'intérieur du tube (4) de pelle pour évacuer les matières de déblai rejetées par les pelles (11) à travers les ouvertures d'éjection (10), caractérisé par le fait que les pelles (11) sont fixées sur des tubulures (9) à collerette faisant saillie dans le sens radial au-dessus de l'enveloppe (7) du tube et entourant les ouvertures d'éjection (10) et qu'elles font saillie au moins par leur extra-dos (14) à travers les tubulures (9) à collerette dans l'intérieur du tube (4) de pelle.

2. Dispositif pour reprise de déblai selon la revendication 1, caractérisé par le fait que les pelles (11) présentent une bride annulaire (13) extérieure par laquelle elles peuvent être assemblées par boulons sur une bride (12) à l'extrémité des tubulures (9) à collerette.

3. Dispositif pour reprise de déblai selon la revendication 1 ou 2, caractérisé par le fait qu'au moins l'extra-dos (14) des pelles (11), qui fait saillie dans l'intérieur du tube (4) de pelle, présente sur le côté intérieur un revêtement (16) élastique recouvrant au moins une ouverture traversante (17) pratiquée dans l'extra-dos (14) des pelles, de préférence un tablier de caoutchouc.

FIG.1

FIG.2

FIG.3